(19) Europäisches Patentamt
European Patent Office
Office européen des brevets

(11) **EP 4 716 082 A1**

(12) **EUROPEAN PATENT APPLICATION**

(43) Date of publication:
25.03.2026  Bulletin 2026/13

(21) Application number: 25180292.2

(22) Date of filing: 02.06.2025

(51) International Patent Classification (IPC):
H02M 1/00 (2006.01)      H02M 1/42 (2007.01)
H02M 1/088 (2006.01)      H02M 1/15 (2006.01)
H02M 5/293 (2006.01)      H02M 7/23 (2006.01)

(52) Cooperative Patent Classification (CPC):
H02M 1/4216; H02M 1/0025; H02M 1/0043;
H02M 1/088; H02M 1/15; H02M 1/4233;
H02M 1/4241; H02M 1/4258; H02M 5/293;
H02M 7/23

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.09.2024  CN 202411323309

(71) Applicant: Vertiv Corporation
Westerville, OH 43082 (US)

(72) Inventors:
• LI, Linde
  Shenzhen, 518055 (CN)
• LI, Jian
  Shenzhen, 518055 (CN)
• SHOU, Fujun
  Shenzhen, 518055 (CN)
• MO, Zhigang
  Shenzhen, 518055 (CN)
• CHEN, Shumei
  Shenzhen, 518055 (CN)

(74) Representative: Harden, Henry Simon et al
Kilburn & Strode LLP
Lacon London
84 Theobalds Road
London WC1X 8NL (GB)

(54) **CURRENT SHARING CONTROL METHOD AND AC-DC CONVERSION SYSTEM**

(57)    A current sharing control method and an AC-DC conversion system are provided. The method is applied to a current sharing controller configured to control an operating state of an AC-DC converter comprising at least two rectification units. Each of the at least two rectification units is in a bridge topology combined with an LLC resonant tank. The method comprises: determining a target adjustment phase based on the absolute values of instantaneous values of three-phase input voltages of the at least two rectification units; determining a target duty cycle of the target adjustment phase in each of the rectification units based on the current sampling values of the at least two rectification units; and adjusting, based on the target duty cycle of the target adjustment phase in each of the rectification units, a duty cycle of a control signal for a switch in each of the rectification units.

Obtaining current sampling values of at least two rectification units and absolute values of instantaneous values of three-phase input voltages of the at least two rectification units — 302

Determining a target adjustment phase based on the absolute values of instantaneous values of three-phase input voltages of the at least two rectification units — 304

Determining a target duty cycle of the target adjustment phase in each of the at least two rectification units based on the current sampling values of the at least two rectification units, where the target duty cycle is used to indicate an adjustment of a voltage gain of the LLC resonant tank — 306

Adjusting, based on the target duty cycle of the target adjustment phase in each of the at least two rectification units, a duty cycle of a control signal for a switch corresponding to the target adjustment phase in each of the at least two rectification units — 308

Figure 3

**Description**

**CROSS REFERENCE TO RELATED APPLICATION**

This application claims priority to Chinese Patent Application No. 202411323309.4 titled "CURRENT SHARING METHOD AND AC-DC CONVERSION SYSTEM", filed on September 20, 2024 with the China National Intellectual Property Administration (CNIPA).

**FIELD**

The present disclosure relates to the field of electric energy conversion, and specifically to a current sharing control method and an AC-DC conversion system.

**BACKGROUND**

A conventional AC-DC converter usually has a two-stage topology of PFC (Power Factor Correction) + DC-DC. In such topology, the front stage PFC is used to control an input current to achieve a high-power factor and a low total harmonic distortion; and the back stage DC-DC converter is used to control an output voltage and current to ensure a stability of the output voltage and current under different operating conditions. The two-stage topology requires a two-stage switching device and an intermediate bus capacitor, which limits optimization of efficiency, power density, and cost to a certain extent. To make optimization on the basis of the two-stage topology, the intermediate bus capacitor is removed, and only a one-stage switching network is required, which derives a three-phase single-stage topology, which has characteristics of higher efficiency, higher power density, and the like, and has a broad application prospect in high-power power supply fields, such as power supplies for communication and charging of electric vehicles.

In high-power and low-voltage high-current application scenarios, the three-phase single-stage topology has a large current and therefore requires a switching device with higher current tolerance, and a ripple current on an output capacitor is large, which affects its efficiency, thermal performance, reliability and other indicators. Usually, multiple switching devices and multiple output capacitors are connected in parallel to realize current sharing and reduce the current flowing through each of the switching devices and the output capacitors.

In practical applications, the devices are non-ideal, and device parameters may vary due to process, batch, and other reasons. It is impossible to achieve consistency among parameters of all devices. For example, an inductance value and capacitance value usually have an accuracy of 5% to 10%. An output gain of each of the rectification units is greatly affected by a device parameter of a resonant tank. A difference in gains caused by a difference in device parameters may result in a problem of non-uniform output current. This problem further limits development of the three-phase single-stage topology in application scenarios with higher power and low voltage and high current.

**SUMMARY**

The present disclosure provides a current sharing control method and an AC-DC conversion system, in order to solve the technical problem of non-uniform output current of a converter in the art.

In a first aspect, a current sharing control method is provided in an embodiment of the present disclosure. The method is applied to a current sharing controller. The current sharing controller is configured to control an operating state of an AC-DC converter. The AC-DC converter comprises at least two rectification units. Each of at least two rectification units is a bridge topology combined with an LLC resonant tank. The method comprises: obtaining current sampling values of the at least two rectification units and absolute values of instantaneous values of three-phase input voltages of the at least two rectification units; determining a target adjustment phase based on the absolute values of the instantaneous values of the three-phase input voltages of the at least two rectification units; determining a target duty cycle of the target adjustment phase in each of the at least two rectification units based on the current sampling values of the at least two rectification units, wherein the target duty cycle is used to indicate an adjustment of a voltage gain of the LLC resonant tank; and adjusting, based on the target duty cycle of the target adjustment phase in each of the at least two rectification units, a duty cycle of a control signal for a switch corresponding to the target adjustment phase in each of the at least two rectification units.

In a possible embodiment, wherein determining the target adjustment phase based on the absolute values of the instantaneous values of the three-phase input voltages of the at least two rectification units comprises: determining, based on the absolute values of instantaneous values of three-phase input voltages of each of the at least two rectification units, a first input phase having the largest absolute value in the instantaneous values, a second input phase having the second largest absolute value in the instantaneous values, and a third input phase having the smallest absolute value in the instantaneous values; and wherein each of the first input phase, the second input phase and the third input phase is the target adjustment phase, or the second input phase and the third input phase are the target adjustment phases.

In a possible embodiment, wherein determining the target duty cycle of the target adjustment phase in each of the at least two rectification units based on the currents sampling values of the at least two rectification units comprises: comparing the current sampling values of the at least two rectification units to each other, to determine a relative magnitude of current sampling value of each of the at least two rectification units; determining an adjustment amount of a duty cycle of the target adjustment phase in each of the at least two rectification units, based on the relative magnitude of the current sampling value of each of the at least two rectification units; and determining the target duty cycle of the target adjustment phase in each of the at least two rectification units based on the adjustment amount of the duty cycle and an initial value of the duty cycle of the target adjustment phase in each of the at least two rectification units.

In a possible embodiment, wherein the at least two rectification units comprises a first rectification unit and a second rectification unit; the target adjustment phase comprises the second input phase and the third input phase; and determining an adjustment amount of a duty cycle of the target adjustment phase in each of the at least two rectification units based on the relative magnitude of the current sampling value of each of the at least two rectification units comprises: inputting a difference between current sampling values of the first rectification unit and the second rectification unit into a first preset current sharing loop; obtaining an adjustment amount of the duty cycle of the second input phase in the first rectification unit and an adjustment amount of the duty cycle of the third input phase in the first rectification unit when the current sampling value of the first rectification unit is greater than the current sampling value of the second rectification unit; and obtaining an adjustment amount of the duty cycle of the second input phase in the second rectification unit and an adjustment amount of the duty cycle of the third input phase in the second rectification unit when the current sampling value of the first rectification unit is less than the current sampling value of the second rectification unit.

In a possible embodiment, wherein the at least two rectification units comprises a first rectification unit and a second rectification unit; the target adjustment phase comprises the first input phase, the second input phase and the third input phase; and determining an adjustment amount of a duty cycle of the target adjustment phase in each of the at least two rectification units based on the relative magnitude of the current sampling value of each of the at least two rectification units comprises: inputting a difference between current sampling values of the first rectification unit and the second rectification unit into a second preset current sharing loop; obtaining an adjustment amount of the duty cycle of the first input phase in the first rectification unit, an adjustment amount of the duty cycle of the second input phase in the first rectification unit and an adjustment amount of the duty cycle of the third input phase in the first rectification unit when the current sampling value of the first rectification unit is greater than the current sampling value of the second rectification unit; and obtaining an adjustment amount of the duty cycle of the first input phase in the second rectification unit, an adjustment amount of the duty cycle of the second input phase in the second rectification unit and an adjustment amount of the duty cycle of the third input phase in the second rectification unit when the current sampling value of the first rectification unit is less than the current sampling value of the second rectification unit.

In a possible embodiment, wherein determining a target duty cycle of the target adjustment phase in each of the at least two rectification units based on the current sampling values of the at least two rectification units comprises: determining an average current value of the at least two rectification units based on the currents sampling values of the at least two rectification units; and determining the target duty cycle of the target adjustment phase in each of the at least two rectification units based on the current sampling value of each of the at least two rectification units and the average current value.

In a possible embodiment, wherein the current sampling value comprises at least one of: a sampling value of an input current, a sampling value of a rectified output current, a sampling value of a resonant current, a sampling value of a switch current, and a sampling value of a secondary current of a transformer.

In a second aspect, an AC-DC conversion system is provided in the present disclosure. The AC-DC conversion system comprises an AC-DC converter and a current sharing controller, wherein the AC-DC converter comprises at least two rectification units, and each of the at least two rectification units is a bridge topology combined with an LLC resonant tank; and the current sharing controller is configured to control an operating state of the AC-DC converter, and is specifically configured to perform the method as described above.

In a third aspect, a computer device is provided in the present disclosure. The computer device comprises a processor and a memory communicatively coupled to the processor; wherein the memory stores computer-executable instructions; and the processor is configured to execute the computer-executable instructions stored in the memory to implement the method as described above.

In a fourth aspect, a computer-readable storage medium is further provided in the present disclosure. The computer-readable storage medium has computer-executable instructions stored thereon, and the computer-executable instructions, when executed by a processor, perform the method as described above.

In a fifth aspect, a computer program product is further provided in the present disclosure. The computer program product comprises computer-executable instructions that, when executed by a processor, implement the method as described above.

A current sharing control method and an AC-DC conversion system are provided in the embodiments of the present disclosure. The method is applied to a current sharing controller. The current sharing controller is configured to control an operating state of an AC-DC converter. The AC-DC converter comprises at least two rectification units. Each of the at least two rectification units is a bridge topology combined with an LLC resonant tank. The method comprises: obtaining current sampling values of the at least two rectification units and absolute values of instantaneous values of three-phase input voltages of the at least two rectification units; determining a target adjustment phase based on the absolute values of instantaneous values of three-phase input voltages of the at least two rectification units; determining a target duty cycle of the target adjustment phase in each of the rectification units based on the current sampling values of the at least two rectification units, where the target duty cycle is for indicating an adjustment of a voltage gain of the LLC resonant tank; and adjusting, based on the target duty cycle of the target adjustment phase in each of the rectification units, a duty cycle of a control signal for a switch corresponding to the target adjustment phase in each of the rectification units. In the embodiments of the present disclosure, a pulse width of the control signal for the switch in the rectification unit is adjusted, so that distribution of amplitudes of the input voltage of the resonant tank is adjusted, and thereby a gain of the LLC is changed. In this way, an output current of the LLC is controlled, achieving the purpose of current sharing.

## BRIEF DESCRIPTION OF THE DRAWINGS

Accompanying drawings here are incorporated in and constitute a part of this specification. The drawings illustrate embodiments consistent with the present disclosure and, together with the specification, explain principles of the present disclosure.

Figure 1 is a schematic diagram of a current after an LLC rectifier bridge according to an embodiment;

Figure 2 is a schematic diagram of a current ripple cancellation effect in a three-phase single-stage two-phase interleaved parallel connection according to an embodiment;

Figure 3 is a first flow chart of a current sharing control method according to an embodiment;

Figure 4 is a schematic structural diagram of a three-phase single-stage interleaved parallel-connected AC-DC converter according to an embodiment;

Figure 5 is a schematic waveform diagram of a three-phase input AC power according to an embodiment;

Figure 6 is a first schematic diagram of turning on of a rectification unit according to an embodiment;

Figure 7 is a second schematic diagram of turning on of a rectification unit according to an embodiment;

Figure 8 is a schematic diagram of a Upn waveform according to an embodiment;

Figure 9 is a second flow chart of a current sharing control method according to an embodiment;

Figure 10 is a first block diagram of current sharing control according to an embodiment;

Figure 11 is a schematic diagram of an output current in a case where SM ratios of rectification units are the same according to an embodiment;

Figure 12 is a schematic diagram of an output current in a case where SM ratios of rectification units are different from each other according to an embodiment;

Figure 13 is a second block diagram of current sharing control according to an embodiment;

Figure 14 is a third block diagram of current sharing control according to an embodiment;

Figure 15 is a comparison diagram in a case where inductance values of resonant inductors differ by 5% according to an embodiment;

Figure 16 is a comparison diagram in a case where capacitance values of resonant capacitors differ by 5% according to an embodiment;

Figure 17 is a comparison diagram in a case where inductance values of excitation inductors differ by 5% according to an embodiment;

Figure 18 is a schematic diagram of an input current THD before addition of a current sharing regulation according to an embodiment;

Figure 19 is a schematic diagram of an input current THD after addition of a current sharing regulation according to an embodiment;

Figure 20 is a schematic structural diagram of an AC-DC conversion system according to an embodiment; and

Figure 21 is a hardware structure diagram of a computer device according to an embodiment.

Specific embodiments of the present disclosure are shown through the above-mentioned drawings, and are described in further detail below. These drawings and descriptions are not intended to limit the scope of the concept of the present disclosure in any way, but are intended to illustrate the concepts of the present disclosure for those skilled in the art by referring to the specific embodiments.

**DETAILED DESCRIPTION**

Exemplary embodiments are described in detail hereinafter, and examples thereof are illustrated in the accompanying drawings. When the following description refers to the drawings, the same numbers in different drawings refer to the same or similar elements, unless otherwise indicated. The implementations described in the following exemplary embodiments do not represent all implementations consistent with the present disclosure. On the contrary, they are merely examples of the apparatus and method consistent with aspects of the present disclosure as detailed in the appended claims.

In the description of the present disclosure, terms "first" and "second" are for descriptive purposes only and shall not be understood as indicating or implying relative importance or implicitly indicating quantities of indicated technical features. Therefore, a feature defined with "first" or "second" may comprise explicitly or implicitly one or more such feature. In the description of this specification, "plurality (multiple)" means two or more, unless otherwise expressly and specifically limited.

A conventional AC-DC converter usually has a two-stage topology of PFC+DCDC. In such topology, the front-stage PFC is for controlling an input current to achieve a high-power factor and a low total harmonic distortion; and the rear-stage DC-DC converter is for controlling an output voltage and current to ensure a stability of the output voltage and current under different conditions. The two-stage topology requires a two-stage switching device and an intermediate bus capacitor, which limits optimization of efficiency, power density, and cost to a certain extent.

To optimize on the basis of the two-stage topology, the intermediate bus capacitor is removed, and only a one-stage switching network is required, deriving a three-phase single-stage topology, which has characteristics of higher efficiency, higher power density, and the like, and has a broad application prospect in high-power power supply fields, such as power supplies for communication and charging of electric vehicles.

In a high-power and low-voltage high-current application scenario, the three-phase single-stage topology carries a large current and therefore requires switching devices with higher current handling capability, and a ripple current on an output capacitor is also large, which affects its efficiency, thermal, reliability and other indicators. Conventionally, multiple switching devices and multiple output capacitors are connected in parallel to realize current sharing and reduce the current flowing through each of the switching devices and the output capacitors. For example, the switch is configured to comprise two switches in parallel instead of one switch. Hence, the current flowing through each switch can be theoretically reduced by half, and a turn-on loss of the switch can be reduced by half.

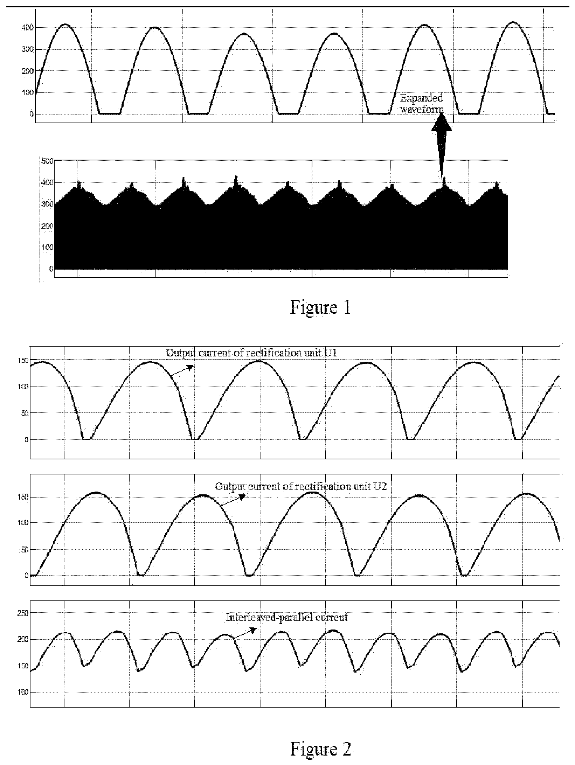

In a case where the three-phase single-stage topology has only one rectification unit, an input is 380V, 50HZ, an output is 270V, 50KW, and a capacitance of an output electrolytic capacitor is 5640uF, the current ripple after the LLC rectifier bridge is quite large, with a peak-to-peak value reaching 425.9A, as shown in Figure 1. Shape of the ripple current on the output electrolytic capacitor is similar to a sine half wave. From calculation of the ripple current of the output electrolytic capacitor in a period from 0.02s to 0.18s, an effective value reaches 83.32A. A nominal ripple current of electrolytic capacitors is usually several amperes. For example, in a case where an effective value of a nominal ripple current of an electrolytic capacitor is 2A, then at least 42 electrolytic capacitors are needed to be connected in parallel, without considering de-rating. Too many electrolytic capacitors are not conducive to improving the power density of the three-phase single stage.

In a conventional method, multiple rectification units are interleaved and connected in parallel to stagger the wave timing of the switches of a rectifier bridge unit by an angle, for example, by 90 degrees when two phases are interleaved, and by 120 degrees when three phases are interleaved. In this way, a ripple cancellation effect is produced in the output current of the rectification unit, so that the output current ripple of the rectification unit is reduced and thereby the current ripple on the output electrolytic capacitor is reduced. Figure 2 shows a current ripple cancellation effect of output currents of the rectification units U1 and U2 in a three-phase single-stage two-phase interleaved parallel converter.

With the two rectification units in an interleaved parallel connection, under the same condition (that is, the input is 380V, 50HZ, the output is 270V, 50KW, and the capacitance of the output electrolytic capacitor is 5640uF), the effective value of the ripple current of the output electrolytic capacitor from 0.02s to 0.18s is 27.2A, from calculation. For example, in a case where an effective value of a nominal ripple current of an electrolytic capacitor is 2A, then only 14 electrolytic capacitors are needed to be connected in parallel, without considering de-rating, which is 28 less than the 42 required in the non-interleaved parallel connection. The number of electrolytic capacitors is reduced, which is conducive to improvement of a three-phase single-stage power density.

The output gain of each of the rectification units is greatly affected by a device parameter of the resonant tank. For example, a difference in inductance of a resonant inductor, a difference in capacitance of a resonant capacitor, and a difference in inductance of an excitation inductor may affect the gain of the LLC. In a case where the rectification units have the same wave frequency, duty cycle and phase, due to the difference in gains, the output current is non-uniform. As the non-uniformity of current sharing exceeds a certain limit, heat distribution over the rectification unit is uneven. In an even severe case, a rectification unit with a large current is in an overcurrent operation. Once the withstand current for the switch is exceeded, the switch is damaged, so that reliability of the switch is affected.

In practical applications, the devices are non-ideal, and device parameters may vary due to process, batch, and other reasons. It is impossible to achieve consistency among parameters of all devices. For example, an inductance value and capacitance value usually have an accuracy of 5% to 10%. The problem of non-uniform current in the interleaved parallel three-phase single-stage topology caused by the difference in the device parameter further limits the development of the three-phase single-stage topology in an application scenario with higher power, low voltage and high current.

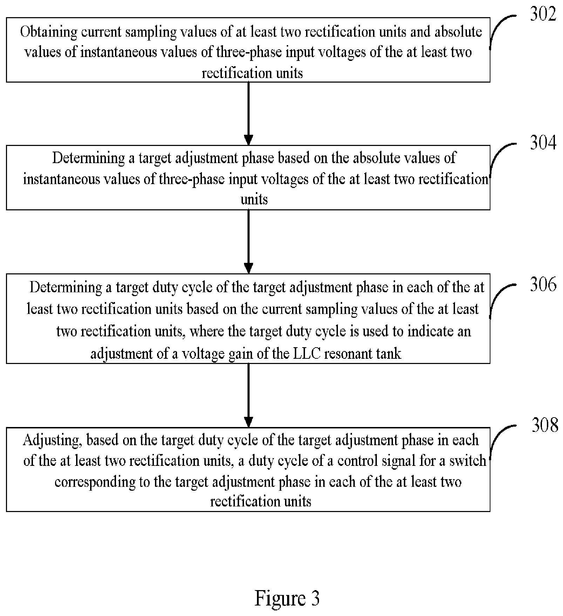

The embodiment of the present disclosure provides a current sharing control method, which is applied to a current sharing controller. The current sharing controller is used to control an operating state of an AC-DC converter. The AC-DC converter comprises at least two rectification units, and each of the at least two rectification units is a bridge topology combined with an LLC resonant tank. As shown in Figure 3, the method comprises:

step 302: obtaining current sampling values of the at least two rectification units and absolute values of instantaneous values of three-phase input voltages of the at least two rectification units;

step 304: determining a target adjustment phase based on the absolute values of instantaneous values of three-phase input voltages of the at least two rectification units;

step 306: determining a target duty cycle of the target adjustment phase in each of the rectification units based on the current sampling values of the at least two rectification units, wherein the target duty cycle is used to indicate the adjustment of a voltage gain of the LLC resonant tank;

step 308: adjusting a duty cycle of a control signal of a switch corresponding to the target adjustment phase in each of the rectification units based on the target duty cycle of the target adjustment phase in each of the rectification units.

Wherein, a current sampling value of a rectification unit refers to a current in a circuit of the rectification unit, and the current sampling value is obtained by sampling the current or voltage in the circuit. The sampling points and sampling times of the current sampling values of the at least two rectification units need to be consistent to determine current magnitudes of the at least two rectification units at the same position and at the same instant.

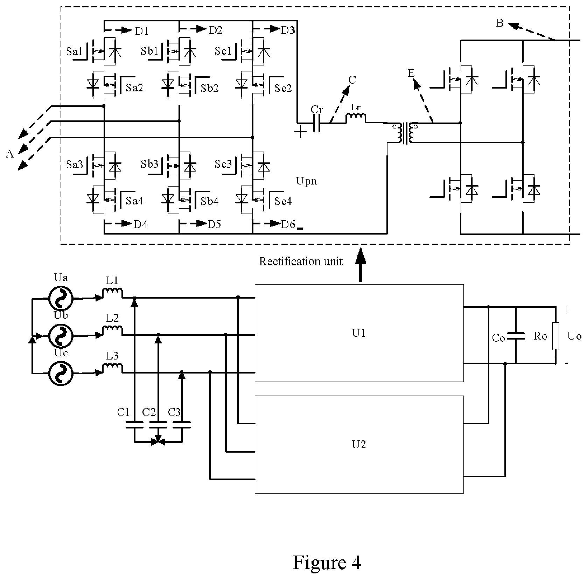

Depending on different sampling points of the current sampling value, when directly sampling a current in the circuit, the current sampling values may comprise one or more of the following: a sampling value of an input current (such as collected at point A in Figure 4), a sampling value of a rectified output current (such as collected at point B in Figure 4), a sampling value of a resonant current (such as collected at point C in Figure 4), a current sampling value for a switch (such as collected at points D1 to D6 in Figure 4), and a sampling value of a transformer secondary current (such as collected at point E in Figure 4). The current sampling value can be quickly obtained by directly sampling the current at points of the circuit.

In a case where the current sampling value is indirectly determined by collecting the voltage in the circuit, as shown in Figure 4, the differential voltage of a resonant capacitor may be sampled, and then a current through a resonant capacitor may be calculated through the following equation:

$$i_{cr} = C\frac{du}{dt};$$

Since the resonant capacitor and the resonant inductor are in the same current loop, the current through the resonant capacitor $i_{cr}$ is equal to a current through the resonant inductor, i.e., $i_{Lr} = i_{cr}$. After the current of the resonant capacitor $i_{cr}$ is calculated, the current through the resonant inductor $i_{Lr}$ can be obtained.

In addition, the current sampling value of a rectification unit may be directly obtained by sampling inside the rectification unit through the above method. Alternatively, a total current of all rectification units may be sampled, and the current sampling value of the rectification unit is determined based on the total current and a sum of the current sampling values of the other rectification units.

The instantaneous value of three-phase input voltages may be obtained by sampling an input voltage of each phase. For an AC-DC converter including at least two rectification units, an input terminal of each of the rectification units is connected to an output terminal of the three-phase AC power, and the input terminals of the at least two rectification units are connected in parallel to each other. The three-phase input voltages of the rectification units are equal to each other, and it is also possible to acquire only an instantaneous value of a total three-phase input voltage or an instantaneous value of the three-phase input voltage of one of the rectification units. For the three-phase input voltages, voltages on three phases/lines may be sampled; or voltages on two phases/lines may be sampled, based on which the other phase/line voltage may be calculated.

The AC-DC converter shown in Figure 4 comprises two rectification units U1 and U2 in an interleaving parallel connection. In step 304, it is necessary to obtain the instantaneous values of the three-phase input voltages Ua, Ub, and Uc of the rectification units U1 and U2. Voltage sampling points for Ua, Ub and Uc may be at the input terminal of the rectification unit U1 or rectification unit U2, or at the output terminal of the three-phase AC power. Moreover, Ua, Ub, and Uc may be directly collected, or two of Ua, Ub, and Uc may be collected, and then the voltage of the remaining one is calculated.

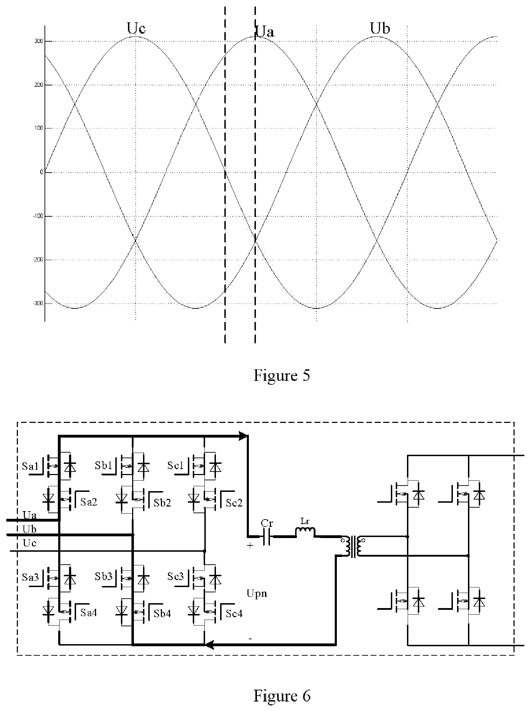

In the rectification unit using a bridge topology combined with an LLC resonant tank, in the circuit structure as shown in Figure 4, in a switching cycle, the amplitude of an input voltage Upn of the resonant tank changes with variation of a emission wave mode of a control signal for the switch. For a three-phase input AC power as shown in Figure 5, when the input voltage satisfies |Ua|>|Ub|>|Uc|, and Ua>0, Ub<0, Uc<0 (The following descriptions are based on such operating condition, unless otherwise specified), the control signal of the switches connected to each phase of the three-phase input AC power have the same emission wave frequency. When the dead zone is not considered, Ua phase duty cycle is 0.5 = Ub phase duty cycle + Uc phase duty cycle.

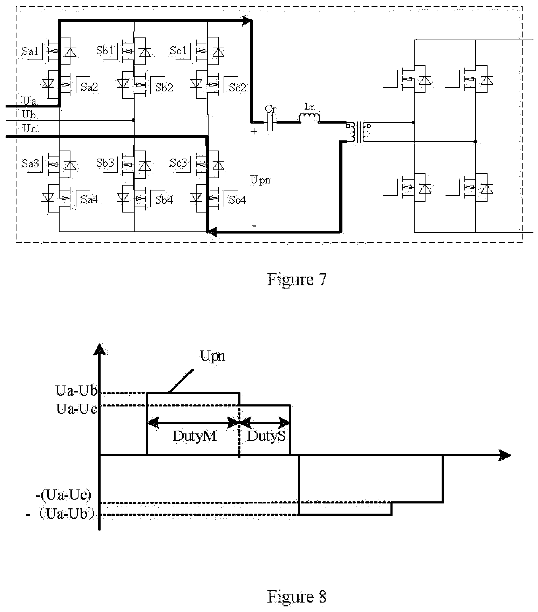

When Sa1, Sa2, Sb3, and Sb4 are turned on at the same time, that is, an upper bridge arm connected to Ua and a lower bridge arm connected to Ub are turned on, as shown in Figure 6, the positive electrode of Upn is clamped to Ua, the negative electrode of Upn is clamped to Ub, and there has Upn=Ua-Ub. When Sa1, Sa2, Sc3, and Sc4 are turned on at the same time, that is, an upper bridge arm connected to Ua and a lower bridge arm connected to Uc are turned on, as shown in Figure 7, the positive electrode of Upn is clamped to Ua, the negative electrode of Upn is clamped to Uc, and there has Upn=Ua-Uc.

Due to a relationship of |Ua|>|Ub|>|Uc|, where Ua>0, Ub<0, and Uc<0, an amplitude of Ua-Ub is greater than Ua-Uc, that is, when the upper arm connected to Ua is turned on, the amplitude of Upn when the lower bridge arm connected to Ub is turned on is greater than the amplitude of Upn when the lower bridge arm connected to Uc is turned on. As shown in Figure 8, a magnitude of an effective value of Upn within a switching cycle may be changed by adjusting the on-time of the switch on the lower bridge arm connected to Ub and the on-time of the switch on the lower bridge arm connected to Uc and an LLC gain changes, and an output current changes accordingly.

Therefore, for each of the rectification unit, a current operating condition of the rectification unit can be determined based on an absolute value of an instantaneous value of a three-phase input voltage of the rectification unit. Then, based on the current sampling values and corresponding current operating condition of all rectification units, the duty cycle of the control signal for the switch of each of the rectification units is adjusted, and the voltage gain of the LLC resonant tank of each of the rectification units is changed, and thereby the magnitude of the output current is changed.

In the method according to the above embodiment, current sampling values of the at least two rectification units and absolute values of instantaneous values of three-phase input voltages of the at least two rectification units are obtained; a target adjustment phase is determined based on the absolute values of instantaneous values of three-phase input voltages of the at least two rectification units; a target duty cycle of the target adjustment phase in each of the rectification units is determined based on the current sampling values of the at least two rectification units, where the target duty cycle is for indicating an adjustment of a voltage gain of the LLC resonant tank; and a duty cycle of a control signal for a switch corresponding to the target adjustment phase in each of the rectification units is adjusted based on the target duty cycle of the target adjustment phase in each of the rectification units. In the embodiment of the present disclosure, a pulse width of the control signal for the switch in the rectification unit is adjusted, so that distribution of amplitudes of the input voltage of the resonant tank is adjusted, and thereby a gain of the LLC is changed. In this way, an output current of the LLC is controlled, and the purpose of current sharing is achieved.

In an embodiment, a target adjustment phase is determine based on the absolute values of instantaneous values of three-phase input voltages of the at least two rectification units, comprising: determining, based on absolute values of instantaneous values of three-phase input voltages of each of the rectification units a first input phase having the largest absolute value of the instantaneous values, a second input phase having the second largest absolute value of the instantaneous values, and a third input phase having the smallest absolute value of the instantaneous values in the three-phase input voltage of each of the rectification unit; wherein each of the first input phase, the second input phase and the third input phase is the target adjustment phase, or the second input phase and the third input phase are the target adjustment phases.

For each of the rectification units, the one with the largest absolute value of the instantaneous values in the three-phase input voltage is determined as the first input phase L-phase, the one with the second largest absolute value of the instantaneous values in the three-phase input voltage is determined as the second input phase M-phase, and the one with the smallest absolute value of the instantaneous values in the three-phase input voltage is determined as the third input phase S-phase. Based on Figure 8, it can be known that during an adjustment, the duty cycle of the L-phase may be kept unchanged and the duty cycles of the M-phase and the S-phase may be adjusted. In this case, the duty cycle of the M-phase increases and the duty cycle of the S-phase decreases, then the effective value of Upn increases, and the output gain of the LLC increases, and the output current increases. In a contrary case, the output current is reduced. Alternatively, during an adjustment, the duty cycle of the L-phase may be adjusted. In this case, the duty cycle of the S-phase and the duty cycle of the M-phase are changed, the output gain of the LLC is changed, and the output current is changed accordingly.

In an embodiment of the present disclosure, the target adjustment phase can be adjusted as follows: adjusting a ratio of the S-phase and the M-phase or adjusting the L phase to cause the S-phase and the M-phase to change accordingly, thereby achieving the effect of adjusting the output gain of LLC, and then adjusting the magnitude of the output current of the rectification unit.

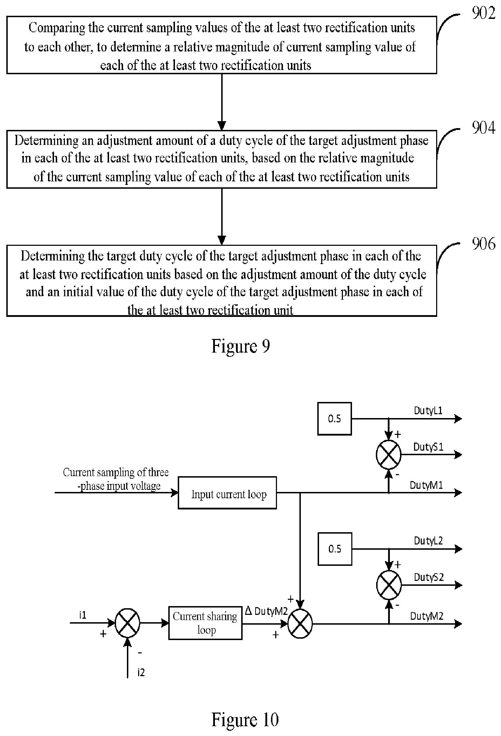

In an embodiment, as shown in Figure 9, determining a target duty cycle of the target adjustment phase in each of the rectification units based on the current sampling values of the at least two rectification units, comprising: in step 902, the current sampling values of the at least two rectification units are compared to each other, to determine a relative magnitude of the current sampling value of each of the rectification units; in step 904, an adjustment amount of a duty cycle of the target adjustment phase in each of the rectification units is determined, based on the relative magnitude of the current sampling value of each of the rectification units; in step 906, the target duty cycle of the target adjustment phase in each of the rectification units is determined based on the adjustment amount of a duty cycle and an initial value of the duty cycle of the target adjustment phase in each of the rectification units.

The relative magnitude of the current sampling value is determined in relative to a specific current value. In an embodiment, one of the current sampling values of the at least two rectification units is used as the specific current value. The current sampling value(s) of the other rectification unit(s) are compared with the specific current value to determine whether the current sampling value of the other rectification unit is relatively large or small. Then, based on a comparison result, the magnitude of the output current of the other rectification unit is adjusted accordingly by adjusting the duty cycle.

Specifically, after one of the rectification units is determined as the reference, the current sampling value of each of the rectification units and the current sampling value of the reference rectification unit are inputted to the preset current sharing loop. Through the preset current sharing loop operation and the output limiting amplitude of the current sharing loop, the adjustment amount of the duty cycle of the target adjustment phase corresponding to each of the rectification units is obtained, combined with an initial value of the duty cycle, the target duty cycle is determined.

Wherein the number of the preset current sharing loop is at least one, and can be determined at most based on the number of the rectification units. In a case where there is only one preset current sharing loop, the current sampling values of each of the rectification units are sequentially inputted into the preset current sharing loop to obtain the adjustment amount of the duty cycle of each of the rectification units. In a case where there are multiple preset current sharing loops, for example, each of the rectification units corresponds to a preset current sharing loop, and then the current sampling values of each of the rectification units are inputted into the preset current sharing loops according to the correspondence thereof to obtain the adjustment amount of the duty cycle of each of the rectification units.

In the above process, after the specific current value in the current sampling values of the at least two rectification units is set, for example, taking the minimum value or the maximum value as the specific current value, the current sampling values of the at least two rectification units are directly inputted into the preset current sharing loop to determine the adjustment amount of the duty cycle.

In the method provided by the above embodiment, the current sampling value of one of the rectification units may be directly determined as a reference, and the output current of the other rectification unit is adjusted, so that the output current of the other rectification unit is close to the output current value of the reference rectification unit. Such control process has a small amount of calculation and is suitable for the case where there are multiple rectification units.

In an embodiment, at least two rectification units comprise a first rectification unit and a second rectification unit; the target adjustment phase comprises the second input phase and the third input phase; according to the relative magnitude of the current sampling value of each of the rectification units, the adjustment amount of the duty cycle of the target adjustment phase in each of the rectification units can be determined, comprises: inputting a difference between current sampling values of the first rectification unit and the second rectification unit into a first preset current sharing loop; obtaining an adjustment amount of the duty cycle of the second input phase in the first rectification unit and an adjustment amount of the duty cycle of the third input phase in the first rectification unit when the current sampling value of the first rectification unit is greater than the current sampling value of the second rectification unit; and obtaining an adjustment amount of the duty cycle of the second input phase in the second rectification unit and an adjustment amount of the duty cycle of the third input phase in the second rectification unit when the current sampling value of the first rectification unit is less than the current sampling value of the second rectification unit.

After the difference between current sampling values of the first rectification unit and the second rectification unit is inputted into the first preset current sharing loop, the first preset current sharing loop may adjust the duty cycle of the second input phase or the duty cycle of the third input phase, which is essentially to change a ratio of the duty cycle of the S-phase to the duty cycle of the M-phase.

An example in which the AC-DC converter comprises rectification units U1 and U2 is provided. As shown in Figure 10: i1 represents a current sampling signal of the rectification unit U1; i2 represents a current sampling signal of the rectification unit U2; $\Delta$DutyM2 represents an adjustment amount of the duty cycle of an M-phase of the rectification unit U2; DutyL1 represents a duty cycle of an L-phase of the rectification unit U1; DutyM1 represents a duty cycle of an M-phase of the rectification unit U1; DutyS1 represents a duty cycle of an S-phase of the rectification unit U1; DutyL2 represents a duty cycle of an L-phase of the rectification unit U2; DutyM2 represents a duty cycle of the M-phase of the rectification unit U2; and DutyS2 represents a duty cycle of an S-phase of the rectification unit U2.

As shown in figure 10, current sharing regulation of the first preset current sharing loop can be as follow.

In a case of i2<i1, an input error of the current sharing loop is positive, and an output $\Delta$DutyM2 of the current sharing loop is positive, and the DutyM2 increases and the DutyS2 decreases, that is, the duty cycle of the M-phase of the rectification unit U2 increases, and the duty cycle of the S-phase of the rectification unit U2 decreases, an SM ratio decreases, resulting in that the Upn increases, an LLC gain increases and i2 increases, and i2 is approached to i1, achieving the purpose of current sharing.

In a case of i2>i1, an input error of the current sharing loop is negative, and an output $\Delta$DutyM2 of the current sharing loop is negative, and the DutyM2 decreases and the DutyS2 increases, that is, the duty cycle of the M-phase of the rectification unit U2 decreases, and the duty cycle of the S-phase of the rectification unit U2 increases, an SM ratio increases, resulting in that the Upn decreases, an LLC gain decreases, and i2 decreases, i2 is approached to i1, achieving the purpose of current sharing.

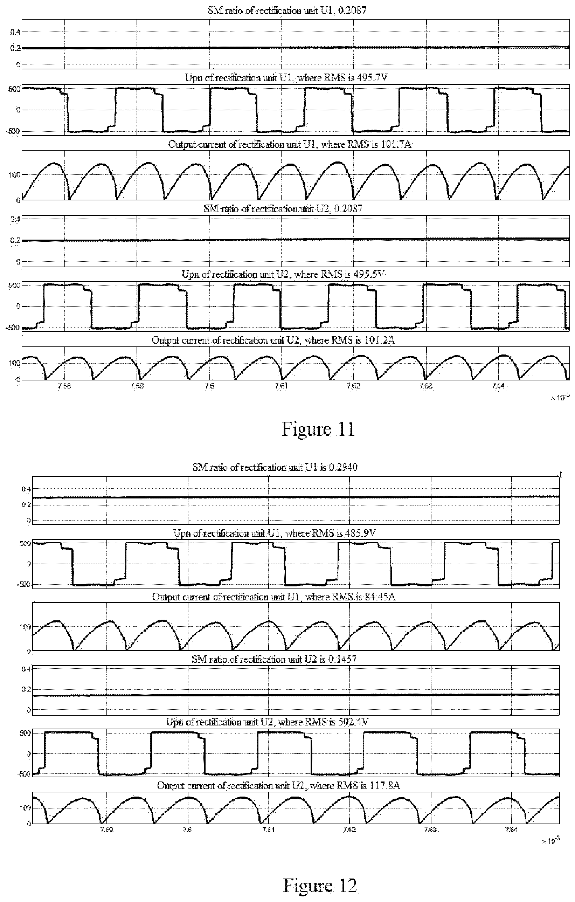

In a practical application of the above embodiment, a nominal three-phase input voltage is 380V, 50HZ, a nominal output voltage is 270V, and a nominal output power is 50KW. The parameters of two rectification units are consistent, and the effect of the SM ratio on the output current is observed. In a case where the rectification units U1 and U2 have the same SM ratio, as shown in Figure 11, effective values of Upn are consistent, and effective values of the output current are consistent. The above data are presented in the following table:

Table 1 Output Current of Rectification Units under Same SM Ratio

|  | Rectification unit U1 | Rectification unit U2 |
| --- | --- | --- |
| SM ratio | 0.2087 | 0.2087 |
| Effective value of Upn | 495.7V | 495.5V |
| Effective value of output current | 101.7A | 101.2A |

In a case where the SM ratio of the rectification unit U1 is greater than the SM ratio of the rectification unit U2, and the effective value of Upn of the rectification unit U1 is less than that of the rectification unit U2, and the effective value of the output current of the rectification unit U1 is less than that of rectification unit U2, as shown in Figure 12. In a case where the two rectification units have different SM ratios, the impact on the effective value of Upn and the effective value of the output current is shown in the following table. Based on a rule that the larger SM ratio is, the smaller the effective value of Upn is and the smaller the effective value of the output current is, the magnitude of the output current may be adjusted by adjusting the SM ratio.

Table 2 Output Current of Rectification Units under Different SM Ratios

|  | Rectification unit U1 | Rectification unit U2 |
| --- | --- | --- |
| SM ratio | 2.940 | 1.457 |
| Effective value of Upn | 485.9V | 502.4V |

(continued)

| | Rectification unit U1 | Rectification unit U2 |
|---|---|---|
| Effective value of output current | 84.45A | 117.8A |

In the method provided in the above embodiment, by adjusting the duty cycle of the M-phase or the S-phase, the ratio of the duty cycle of the S-phase to the duty cycle of the M-phase is changed so as to control the gain of the LLC, and thereby the output current of the rectification units is controlled, and the purpose of current sharing can be further achieved.

In an embodiment, at least two rectification units comprises a first rectification unit and a second rectification unit; the target adjustment phase comprises a first input phase, a second input phase and a third input phase; and an adjustment amount of a duty cycle of the target adjustment phase in each of the rectification units can be determined based on the relative magnitude of the current sampling value of each of the rectification units, comprises: inputting a difference between current sampling values of the first rectification unit and the second rectification unit into a second preset current sharing loop; obtaining an adjustment amount of the duty cycle of the first input phase in the first rectification unit, an adjustment amount of the duty cycle of the second input phase in the first rectification unit and an adjustment amount of the duty cycle of the third input phase in the first rectification unit when the current sampling value of the first rectification unit is greater than the current sampling value of the second rectification unit; and obtaining an adjustment amount of the duty cycle of the first input phase in the second rectification unit, an adjustment amount of the duty cycle of the second input phase in the second rectification unit and an adjustment amount of the duty cycle of the third input phase in the second rectification unit when the current sampling value of the first rectification unit is less than the current sampling value of the second rectification unit.

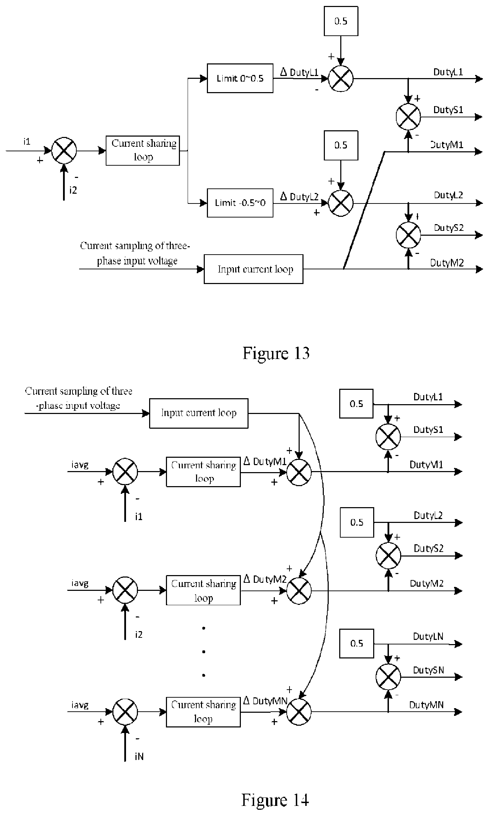

The duty cycle of the L-phase is adjusted and a sum of the duty cycles of the M-phase and the S-phase are adjusted at the same time. Taking the AC-DC converter comprising rectification units U1 and U2 as an example, as shown in Figure 13, i1 represents a current sampling signal of the rectification unit U1; i2 represents a current sampling signal of the rectification unit U2; ΔDutyL1 represents an adjustment amount of a duty cycle of an L-phase of the rectification unit U1; ΔDutyL2 represents an adjustment amount of a duty cycle of an L-phase of the rectification unit U2; DutyL1 represents the duty cycle of the L-phase of the rectification unit U1; DutyM1 represents a duty cycle of an M-phase of the rectification unit U1; DutyS 1 represents a duty cycle of an S-phase of the rectification unit U1; DutyL2 represents a duty cycle of the L-phase of the rectification unit U2; DutyM2 represents a duty cycle of an M-phase of the rectification unit U2; and DutyS2 represents a duty cycle of an S-phase of the rectification unit U2.

As shown in Figure 13, current sharing regulation of the first preset current sharing loop can be as follow.

In a case of i2<i1, an input error of the current sharing loop is positive, and an output of the current sharing loop is positive, and ΔDutyL1 is greater than 0, and ΔDutyL2 is equal to zero, that is, the duty cycle of the L-phase of the rectification unit U1 decreases, and an LLC gain of the rectification unit U1 decreases, and i1 decreases, i1 is approached to i2, achieving the purpose of current sharing.

In a case of i2>i1, an input error of the current sharing loop is negative, and an output of the current sharing loop is negative, ΔDutyL1=0, and ΔDutyL2 is less than 0, that is, the duty cycle of the L-phase of the rectification unit U2 decreases, and an LLC gain of the rectification unit U2 decreases, and i2 decreases, and i2 is approached to i1, so as to achieve the purpose of current sharing.

In the method provided in the above embodiment, the gain of the LLC is controlled by adjusting the duty cycle of the L-phase and adjusting a sum of the duty cycle of the M-phase to the duty cycle of the S-phase at the same time. In this way, , and thereby the output current of the rectification units is controlled, so as to achieve the purpose of current sharing.

In an embodiment, a target duty cycle of the target adjustment phase in each of the rectification units is determined based on the current sampling values of at least two rectification units, comprising: determining an average current value of at least two rectification units based on the current sampling values of at least two rectification units; and determining the target duty cycle of the target adjustment phase in each of the rectification units based on the current sampling value of each of the rectification units and the average current value.

The average current value of the at least two rectification units is used as a specific current value, and the duty cycle of the target adjustment phase of each of the rectification units is adjusted to achieve an effect of current sharing. The average of the current sampling values of the at least two rectification units may be calculated by the current sampling values of the at least two rectification units, and can also be obtained by sampling a total output current of the at least two rectification units and can be determined based on the total output current and the number of the rectification units.

As shown in Figure 14, the target adjustment phase is the M-phase. The AC-DC converter comprises N rectification units. Each of the rectification units corresponds to one current sharing loop. Each current sharing loop is given by the average value iavg of the current sampling values of all the rectification units, with the feedback of current samples i1, i2, ..., iN of the rectification units. Outputs of the current sharing loops are ΔDutyM1, ΔDutyM2, ..., ΔDutyMN respectively so as to adjust the DutyM1, DutyM2, ..., DutyMN.

It should be noted that, according to the idea of the current sharing control method provided in the embodiments of the present disclosure, by adjusting the duty cycle of the control signal for the switch on each corresponding bridge arm and changing the amplitude distribution of the input voltage of the resonant tank, the gain of the LLC is changed, thereby controlling the balance of the output current of LLC. Therefore, during the adjustment, for the target adjustment phase, i.e., the output of the current sharing loop, the L-phase, M-phase, or S-phase may be adjusted. When comparing the current, the current sampling values of the rectification units may be compared with a minimum value or maximum value or average value thereof, as an input of the preset current sharing loop. The target adjustment phases of different rectification units may be the same or different, and initial values of the duty cycles of the target adjustment phases of different rectification units may be the same or different. The number of preset current sharing loops is not limited. Any solution following the above idea to achieve current sharing control falls within the protection scope of the embodiments of the present disclosure.

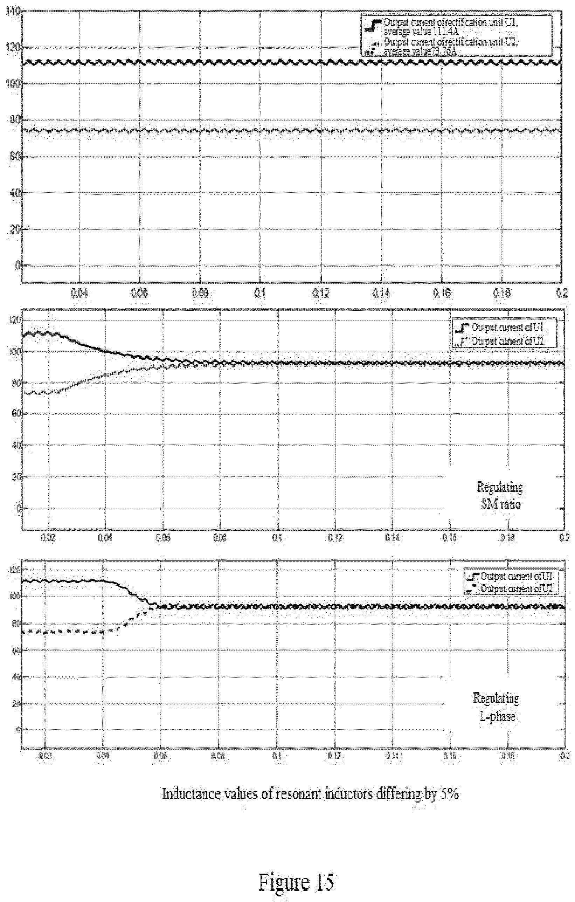

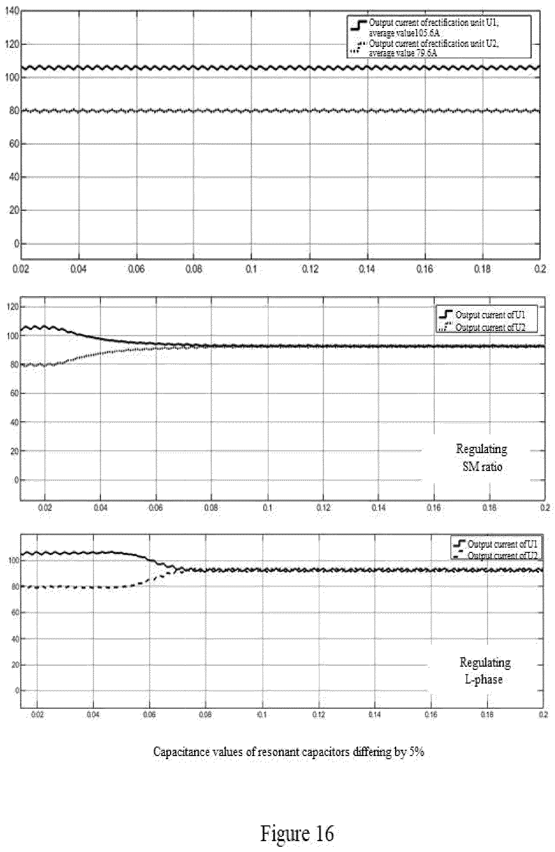

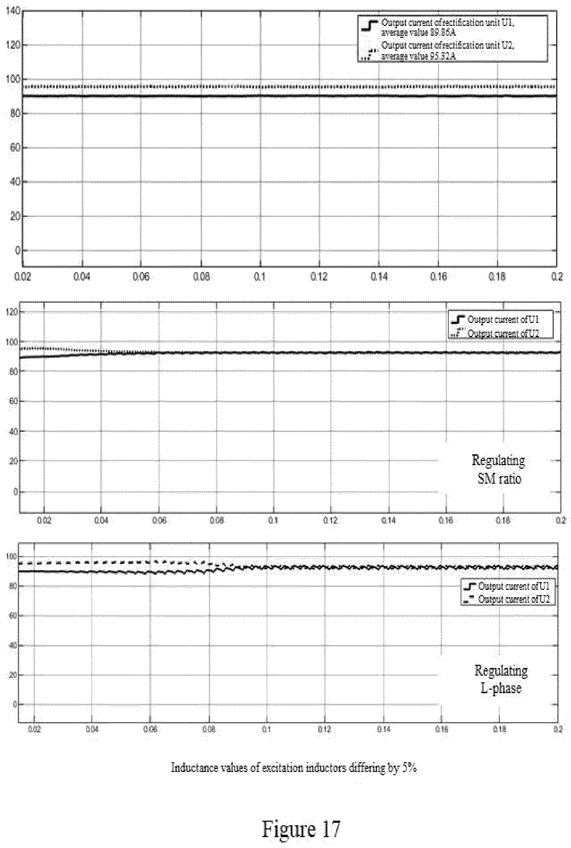

For the current sharing control method based on adjustment of the duty cycle provided in the embodiment of the present disclosure, in order to present the current sharing effect thereof, taking an AC-DC converter comprising two rectification units U1 and U2 as an example, the following data are obtained from actual operation: a nominal three-phase input voltage of 380V 50HZ, a nominal output voltage of 270V, and a nominal output power of 50KW. Without the width modulation and current sharing regulation, in a case where the inductance values of resonant inductance, the capacitance values of resonant capacitance, and the inductance values of excitation inductance of the rectification units U1 and U2 differ by 5% respectively, a non-current sharing effect will occur. After applying the method of width modulation and current sharing according to the present disclosure, the difference in output currents of the rectification unit U1 and the rectification unit U2 gradually decreases until it stabilizes after the current sharing is completed, as shown in the effect comparison diagrams of Figures 15-17.

In the above schematic diagrams, since an output current of a rectification unit contains high-frequency switching ripple, in order to facilitate observation of an average value thereof, instantaneous values of the output current of the rectification unit can be sampled, and a two-stage 100HZ low-pass filtering is performed before displaying.

From the above data, it can be known that, among the resonant inductance, the resonant capacitance and the excitation inductance, the resonant inductance has the greatest impact on the non-uniformity of current sharing, followed by the resonant capacitance, and the excitation inductance has the smallest impact on the non-uniformity of current sharing, as shown in Table 3.

With the method of width modulation and current sharing control in the present disclosure, after the current sharing regulation is completed and stabilized, an average value of the output current of the rectification unit from 0.1s to 0.2s and the non-uniformity of current sharing are calculated as follows. The maximum value of the non-uniformity of current sharing is 0.02%, as shown in Table 4.

Table 3. Non-uniformity of Current Sharing without Current Sharing Regulation

| Comparative items | Output current of rectification unit U1 (A) | Output current of rectification unit U2 (A) | Non-uniformity of current sharing |
|---|---|---|---|
| inductance values of resonant inductors differing by 5% | 111.4 | 73.76 | 20.33% |
| capacitance values of resonant capacitors differing by 5% | 105.6 | 79.60 | 14.04% |
| inductance values of excitation inductors differing by 5% | 89.86 | 95.32 | 2.95% |

Table 4 Non-uniformity of Current Sharing with SM Ratio Regulation

| Comparative items | Output current of rectification unit U1 (A) | Output current of rectification unit U2 (A) | Non-uniformity of current sharing |
|---|---|---|---|
| inductance values of resonant inductors differing by 5% | 92.60 | 92.58 | 0.01% |
| capacitance values of resonant capacitors differing by 5% | 92.61 | 92.60 | 0.01% |
| inductance values of excitation inductors differing by 5% | 92.59 | 92.57 | 0.01% |

Table 5 Non-uniformity of Current Sharing with L-phase Regulation

| Comparative items | Rectification unit U1 Output current (A) | Rectification unit U2 Output current (A) | Non-uniformity of Current Sharing |
|---|---|---|---|
| inductance values of resonant inductors differing by 5% | 92.59 | 92.59 | 0.00% |
| capacitance values of resonant capacitors differing by 5% | 92.61 | 92.58 | 0.02% |
| inductance values of excitation inductors differing by 5% | 92.59 | 92.60 | 0.01% |

The non-uniformity of current sharing is calculated through the following equation.

$$\text{Non-uniformity} = \frac{|I_{max} - I_{avg}|}{I_{avg}} * 100\%$$

In the equation, $I_{avg}$ represents an average output current of each of the rectification units, and $I_{max}$ represents an output current of a rectification unit having a largest difference from $I_{avg}$.

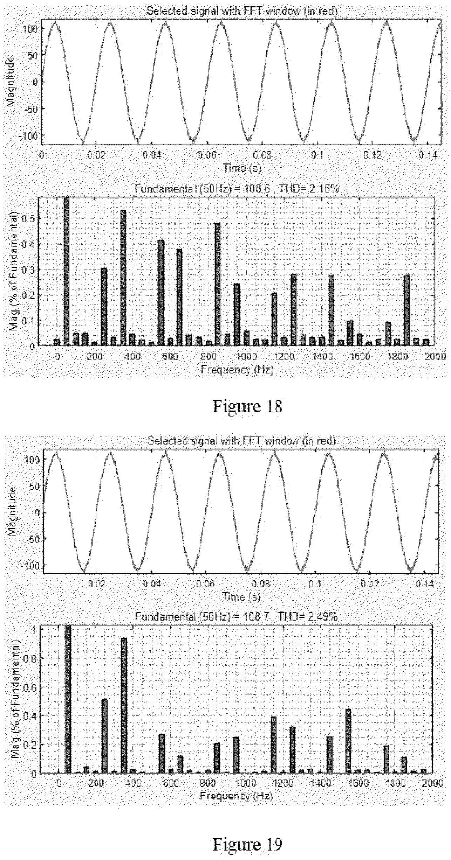

Figure 18 and Figure 19 show the input current THD before and after applying the current sharing regulation. With respect to different resonance parameters, the input Ua phase current THDs before applying the current sharing regulation, and after applying the SM ratio regulation or the L-phase regulation according to the present disclosure may be as shown in the following table, which are less than 3% in all cases. Wherein the scheme of taking the S phase or the M phase as the target adjustment phase to change the SM ratio to adjust the voltage gain of the LLC resonant tank and thus change the size of the output current is defined as the SM ratio regulation scheme, and the scheme of taking the L phase as the target adjustment phase is defined as the L phase regulation scheme.

Table 6 Input Current THD

| Comparative items | THD before current sharing regulation | THD with SM ratio regulation | THD with L-phase regulation |
|---|---|---|---|
| inductance values of resonant inductors differing by 5% | 2.38% | 2.73% | 2.43% |
| capacitance values of resonant capacitors differing by 5% | 2.16% | 2.27% | 2.49% |
| inductance values of excitation inductors differing by 5% | 2.20% | 2.14% | 2.87% |

It should be understood that, although the steps in the flowcharts of the foregoing embodiment are shown sequentially as indicated by the arrows, the steps are not necessarily performed in the order indicated by the arrows. Unless otherwise explicitly specified herein, there is no strict order restriction for the execution of these steps, and these steps can be executed in other orders. Moreover, at least a part of the steps in the flowcharts involved in the above embodiments may include multiple steps or multiple stages, and these steps or stages are not necessarily executed at the same time, but can be executed at different times. The execution order of these steps or stages is not necessarily sequential, but can be executed in turn or alternately with other steps or at least a part of the steps or stages in other steps.

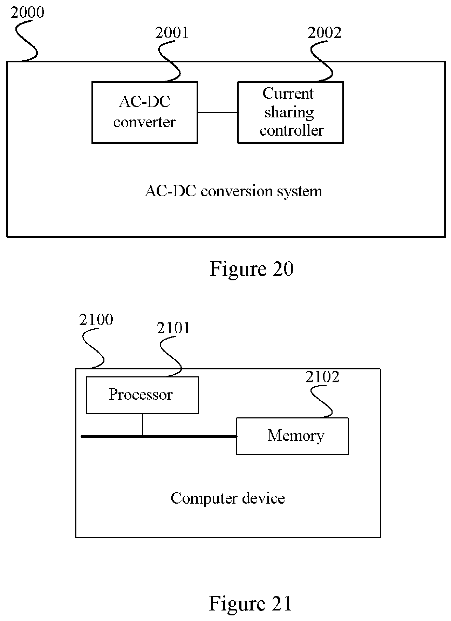

Based on the same inventive concept, an AC-DC conversion system is further provided in an embodiment of the present disclosure. As shown in Figure 20, the system 2000 comprises an AC-DC converter 2001 and a current sharing controller 2002. The AC-DC converter comprises at least two rectification units. Each of the at least two rectification units is in the form of a bridge topology combined with an LLC resonant tank.

The current sharing controller is configured to control an operating state of the AC-DC converter, and is specifically configured to perform the method in any of the above embodiments.

As shown in Figure 21, according to an embodiment of the present disclosure, a computer device 2100 is provided, and the computer device 2100 includes a memory 2101 and a processor 2102.

The memory 2101 is configured to store computer executable instructions executable by the processor.

The processor 2102, when executing the computer executable instructions, implements each step in the method in any of the above embodiments. For details, reference may be made to relevant descriptions in the foregoing method embodiments.

Alternatively, the memory 2101 may be either independent or integrated with the processor 2102. In a case where the memory 2101 is disposed independently, the computer device further comprises a bus for connecting the memory 2101 to the processor 2102.

A computer-readable storage medium is further provided in an embodiment of the present disclosure. The computer-readable storage medium has computer executable instructions stored thereon. The computer executable instructions, when executed by a processor, implement the various steps in the method as described in any of the above embodiments.

A computer program product is further provided in an embodiment of the present disclosure. The computer program product comprises computer executable instructions that, when executed by a processor, implement the method as described in any of the above embodiments.

Those of ordinary skills in the art may understand that all or part of the processes for implementing the above method embodiments may be completed by instructing relevant hardware through a computer program. The computer program may be stored in a non-volatile computer-readable storage medium. The computer executable instructions in the computer program, when executed, may comprise the processes in the embodiments of the method. Any reference to memory, database or other media in the embodiments provided in the present disclosure may comprise at least one of a non-volatile memory or a volatile memory. The non-volatile memory may comprise a read-only memory (ROM), a magnetic tape, a floppy disk, a flash memory, an optical memory, a high-density embedded non-volatile memory, a resistive memory (ReRAM), a Magnetoresistive Random Access Memory (MRAM), a Ferroelectric Random Access Memory (FRAM), a Phase Change Memory (PCM), a graphene memory, and the like. The volatile memory may comprise a random-access memory (RAM) or an external cache memory. As an illustration but not limitation, the RAM may be in various forms, such as a static random-access memory (SRAM) or dynamic random-access memory (DRAM). The database involved in embodiments of the present disclosure may comprise at least one of a relational database or a non-relational database. The non-relational database may comprise, but is not limited to, a distributed database based on block chains. The processor involved in the embodiments of the present disclosure may comprise, but is not limited to, a general-purpose processor, a central processor, a graphics processor, a digital signal processor, a programmable logic device, and a data processing logic device based on quantum computing.

The technical features of the above embodiments can be combined arbitrarily. In order to make the description concise, all possible combinations of the technical features in the above embodiments are not described. However, as long as there is no contradiction in the combination of these technical features, they should be considered as the scope of this specification.

The above embodiments present only some implementations of the present disclosure, which are described in detail but should not be construed as a limitation to a scope of the present disclosure. It should be noted that variations and improvements can be made by those skilled in the art without departing from the idea of the present disclosure. These variations and improvements fall within the protection scope of the present disclosure. Therefore, the protection scope of the present disclosure shall be in accordance with the appended claims.

**Claims**

1. A method for current sharing control, **characterized in that** the method is applied to a current sharing controller, wherein the current sharing controller is configured to control an operating state of an AC-DC converter, and the AC-DC converter comprises at least two rectification units, each of the at least two rectification units is a bridge topology combined with an LLC resonant tank; and the method comprises:

    obtaining current sampling values of the at least two rectification units and absolute values of instantaneous values of three-phase input voltages of the at least two rectification units;
    determining a target adjustment phase based on the absolute values of the instantaneous values of the three-phase input voltages of the at least two rectification units;
    determining a target duty cycle of the target adjustment phase in each of the at least two rectification units based on the current sampling values of the at least two rectification units, wherein the target duty cycle is used to indicate an adjustment of a voltage gain of the LLC resonant tank; and
    adjusting, based on the target duty cycle of the target adjustment phase in each of the at least two rectification units, a duty cycle of a control signal for a switch corresponding to the target adjustment phase in each of the at least two rectification units.

2. The method according to claim 1, wherein determining the target adjustment phase based on the absolute values of the instantaneous values of the three-phase input voltages of the at least two rectification units comprises:

    determining, based on the absolute values of instantaneous values of three-phase input voltages of each of the at least two rectification units, a first input phase having the largest absolute value in the instantaneous values, a second input phase having the second largest absolute value in the instantaneous values, and a third input phase having the smallest absolute value in the instantaneous values; and

wherein each of the first input phase, the second input phase and the third input phase is the target adjustment phase, or the second input phase and the third input phase are the target adjustment phases.

3. The method according to claim 2, wherein determining the target duty cycle of the target adjustment phase in each of the at least two rectification units based on the currents sampling values of the at least two rectification units comprises:

comparing the current sampling values of the at least two rectification units to each other, to determine a relative magnitude of current sampling value of each of the at least two rectification units;

determining an adjustment amount of a duty cycle of the target adjustment phase in each of the at least two rectification units, based on the relative magnitude of the current sampling value of each of the at least two rectification units; and

determining the target duty cycle of the target adjustment phase in each of the at least two rectification units based on the adjustment amount of the duty cycle and an initial value of the duty cycle of the target adjustment phase in each of the at least two rectification units.

4. The method according to claim 3, wherein the at least two rectification units comprises a first rectification unit and a second rectification unit; the target adjustment phase comprises the second input phase and the third input phase; and determining an adjustment amount of a duty cycle of the target adjustment phase in each of the at least two rectification units based on the relative magnitude of the current sampling value of each of the at least two rectification units comprises:

inputting a difference between current sampling values of the first rectification unit and the second rectification unit into a first preset current sharing loop;

obtaining an adjustment amount of the duty cycle of the second input phase in the first rectification unit and an adjustment amount of the duty cycle of the third input phase in the first rectification unit when the current sampling value of the first rectification unit is greater than the current sampling value of the second rectification unit; and

obtaining an adjustment amount of the duty cycle of the second input phase in the second rectification unit and an adjustment amount of the duty cycle of the third input phase in the second rectification unit when the current sampling value of the first rectification unit is less than the current sampling value of the second rectification unit.

5. The method according to claim 3, wherein the at least two rectification units comprises a first rectification unit and a second rectification unit; the target adjustment phase comprises the first input phase, the second input phase and the third input phase; and determining an adjustment amount of a duty cycle of the target adjustment phase in each of the at least two rectification units based on the relative magnitude of the current sampling value of each of the at least two rectification units comprises:

inputting a difference between current sampling values of the first rectification unit and the second rectification unit into a second preset current sharing loop;

obtaining an adjustment amount of the duty cycle of the first input phase in the first rectification unit, an adjustment amount of the duty cycle of the second input phase in the first rectification unit and an adjustment amount of the duty cycle of the third input phase in the first rectification unit when the current sampling value of the first rectification unit is greater than the current sampling value of the second rectification unit; and

obtaining an adjustment amount of the duty cycle of the first input phase in the second rectification unit, an adjustment amount of the duty cycle of the second input phase in the second rectification unit and an adjustment amount of the duty cycle of the third input phase in the second rectification unit when the current sampling value of the first rectification unit is less than the current sampling value of the second rectification unit.

6. The method according to claim 1, wherein determining a target duty cycle of the target adjustment phase in each of the at least two rectification units based on the current sampling values of the at least two rectification units comprises:

determining an average current value of the at least two rectification units based on the currents sampling values of the at least two rectification units; and

determining the target duty cycle of the target adjustment phase in each of the at least two rectification units based on the current sampling value of each of the at least two rectification units and the average current value .

7. The method according to any one of claims 1 to 6, wherein the current sampling value comprises at least one of: a sampling value of an input current, a sampling value of a rectified output current, a sampling value of a resonant current, a sampling value of a switch current, and a sampling value of a secondary current of a transformer.

8. An AC-DC conversion system comprising an AC-DC converter and a current sharing controller, wherein the AC-DC converter comprises at least two rectification units, and each of the at least two rectification units is a bridge topology combined with an LLC resonant tank; and
the current sharing controller is configured to control an operating state of the AC-DC converter, and is specifically configured to perform the method according to any one of claims 1 to 7.

9. A computer device comprising a processor and a memory communicatively coupled to the processor; wherein

   the memory stores computer-executable instructions; and
   the processor is configured to execute the computer-executable instructions stored in the memory to implement the method according to any one of claims 1 to 7.

10. A computer-readable storage medium having computer executable instructions stored thereon, wherein the computer executable instructions, when executed by a processor, perform the method according to any one of claims 1 to 7.

11. A computer program product comprising computer-executable instructions, wherein the computer-executable instructions, when executed by a processor, perform the method according to any one of claims 1 to 7.

Figure 1

Figure 2

Obtaining current sampling values of at least two rectification units and absolute values of instantaneous values of three-phase input voltages of the at least two rectification units `— 302`

Determining a target adjustment phase based on the absolute values of instantaneous values of three-phase input voltages of the at least two rectification units `— 304`

Determining a target duty cycle of the target adjustment phase in each of the at least two rectification units based on the current sampling values of the at least two rectification units, where the target duty cycle is used to indicate an adjustment of a voltage gain of the LLC resonant tank `— 306`

Adjusting, based on the target duty cycle of the target adjustment phase in each of the at least two rectification units, a duty cycle of a control signal for a switch corresponding to the target adjustment phase in each of the at least two rectification units `— 308`

Figure 3

Figure 4

Figure 5

Figure 6

...

Figure 7

Figure 8

902

Comparing the current sampling values of the at least two rectification units to each other, to determine a relative magnitude of current sampling value of each of the at least two rectification units

904

Determining an adjustment amount of a duty cycle of the target adjustment phase in each of the at least two rectification units, based on the relative magnitude of the current sampling value of each of the at least two rectification units

906

Determining the target duty cycle of the target adjustment phase in each of the at least two rectification units based on the adjustment amount of the duty cycle and an initial value of the duty cycle of the target adjustment phase in each of the at least two rectification unit

Figure 9

Current sampling of three -phase input voltage → Input current loop

0.5 → DutyL1

+ DutyS1

- DutyM1

0.5 → DutyL2

+ DutyS2

- DutyM2

i1 +

i2 -

Current sharing loop

Δ DutyM2

+

+

Figure 10

Figure 11

Figure 12

Figure 13

Figure 14

Inductance values of resonant inductors differing by 5%

Figure 15

Capacitance values of resonant capacitors differing by 5%

Figure 16

Figure 17

Figure 18

Figure 19

2000

2001                    2002

AC-DC
converter

Current
sharing
controller

AC-DC conversion system

Figure 20

2100        2101

Processor                    2102

Memory

Computer device

Figure 21

| | Europäisches Patentamt |
| | European Patent Office |
| | Office européen des brevets |

# EUROPEAN SEARCH REPORT

**Application Number**

EP 25 18 0292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 021 527 B (UNIV NANJING AERONAUTICS & ASTRONAUTICS) 21 June 2024 (2024-06-21) * abstract * * paragraph [0001] - paragraph [0095]; claims 1-9; figures 1-12 * | 1-11 | INV. H02M1/00 H02M1/42 H02M1/088 H02M1/15 H02M5/293 H02M7/23 |
| | ----- | | |
| A | EP 1 640 850 A1 (ST MICROELECTRONICS SRL [IT]) 29 March 2006 (2006-03-29) * abstract * * paragraph [0001] - paragraph [0078]; figures 1-13 * | 1-11 | |
| | ----- | | |
| A | EP 2 993 774 A1 (AEG POWER SOLUTIONS GMBH [DE]) 9 March 2016 (2016-03-09) * abstract * * paragraph [0001] - paragraph [0058]; figures 1-14 * | 1-11 | |
| | ----- | | |

**TECHNICAL FIELDS SEARCHED (IPC)**

H02M

The present search report has been drawn up for all claims

| Place of search | Date of completion of the search | Examiner |
|---|---|---|
| The Hague | 16 November 2025 | Adami, Salah-Eddine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 716 082 A1

## ANNEX TO THE EUROPEAN SEARCH REPORT
## ON EUROPEAN PATENT APPLICATION NO.

EP 25 18 0292

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2025

| Patent document cited in search report | | Publication date | Patent family member(s) | | Publication date |
|---|---|---|---|---|---|
| CN 115021527 | B | 21-06-2024 | NONE | | |
| EP 1640850 | A1 | 29-03-2006 | EP | 1640850 A1 | 29-03-2006 |
| | | | US | 2006139976 A1 | 29-06-2006 |
| EP 2993774 | A1 | 09-03-2016 | NONE | | |

EPO FORM P0459

For more details about this annex : see Official Journal of the European Patent Office, No. 12/82

30

**REFERENCES CITED IN THE DESCRIPTION**

**Patent documents cited in the description**

- CN 202411323309